# EUROPEAN PATENT SPECIFICATION

(11) **EP 3 070 321 B1**
(45) Date of publication and mention of the grant of the patent: **24.01.2018**
(21) Application number: 16160373.3
(22) Date of filing: 15.03.2016
(51) Int. Cl.: F02M 43/04, F02M 57/02, F02M 21/02, F02B 25/04, F02D 19/06, F02D 19/10, F02D 29/06, F02B 3/06, F02B 43/00, F02M 53/04

(54) **FUEL VALVE FOR INJECTING A LOW FLASHPOINT FUEL INTO A COMBUSTION CHAMBER OF A LARGE SELF-IGNITING TURBOCHARGED TWO-STROKE INTERNAL COMBUSTION ENGINE**
KRAFTSTOFFVENTIL ZUM EINSPRITZEN EINES KRAFTSTOFFS MIT NIEDRIGEM FLAMMPUNKT IN EINER BRENNKAMMER EINES GROSSEN SELBSTZÜNDENDEN AUFGELADENEN ZWEITAKTVERBRENNUNGSMOTORS
SOUPAPE D'INJECTION DE CARBURANT À FAIBLE POINT D'INFLAMMABILITÉ DANS UNE CHAMBRE DE COMBUSTION À AUTO-ALLUMAGE D'UN GROS MOTEUR À COMBUSTION INTERNE À DEUX TEMPS À TURBOCOMPRESSEUR

(30) Priority: 20.03.2015 DK 201500167
(43) Date of publication of application: 21.09.2016
(73) Proprietor: MAN DIESEL & TURBO, FILIAL AF MAN DIESEL & TURBO SE, TYSKLAND, 2450 Copenhagen SV (DK)
(72) Inventor: Hagen, Peter, DK-2791 Dragoer (DK)
(74) Representative: Nordic Patent Service A/S

(56) References cited:
- WO-A1-2013/086427
- US-A- 6 073 862
- US-A1- 2003 097 924

## Description

### FIELD

The present invention relates to a fuel valve for injecting a low flashpoint fuel into the combustion chamber of a large low-speed uniflow turbocharged two-stroke internal combustion engine.

### BACKGROUND ART

Large low-speed turbocharged two-stroke self-igniting engines of the crosshead type are typically used in propulsion systems of large ships or as prime mover in power plants. Very often, these engines are operated with heavy fuel oil.

Recently, there has been a demand for large turbocharged two-stroke self-igniting engines to be able to handle alternative types of fuel, such as gas, methanol, coal slurry, petroleum coke and the like. One group of fuels that is in increasing demand are low flashpoint fuels.

Many low flashpoint fuels, such as methanol, LPG, DME or biofuel are relatively clean fuels that result in significantly lower levels of sulfurous components, NOx and CO2 in the exhaust gas when used as fuel for a large low-speed uniflow turbocharged two-stroke internal combustion engine when compared with e.g. using heavy fuel oil as fuel.

However, there are problems associated with using a low flashpoint fuels in a large low-speed uniflow turbocharged two-stroke internal combustion engine. One of those problems is the low flashpoint, which causes significant problems if low flashpoint fuel leaks into one of the other systems of the engine and mixes with another fluid, such as e.g. the lubrication oil system. Low flashpoint fuel, is inherently easy to ignite and vapors thereof can easily form explosive mixtures. Thus, should low flashpoint find its way into another system of the engine it is necessary to stop the engine operation for safety reasons and to clean or replace all of the liquid in such a system, a costly and cumbersome affair for the operator of the engine.

The construction of known fuel valves, always has leakage from the shaft of the valve needle and the bore in which the shaft is guided, due to the design of the needle and seat. Therefore, a supply of pressurized sealing liquid sealing oil' is applied to the clearance between the shaft and the bore, both for sealing purposes, but also for lubrication purposes. In order to keep leakage to a minimum the clearance is kept as small as possible with very narrow tolerances, but a small clearance requires lubrication between the shaft and the bore.

Separation of sealing oil and fuel is difficult, in case the two fluids has been mixed thus causing error is in the system. Detection of fuel in the lubrication oil system will result of shut down of the engine, and it is often difficult to trouble shoot the root cause.

Another safety related issue is the requirement by the ship classification societies that low flashpoint fuels are not allowed remain in the fuel valves and the tubing leading to the fuel valves when the engine is not operated on the low flashpoint fuel, e.g. when the engine is not operating or what it is a dual fuel engine that is operated on another type of fuel. Thus, provisions have to be made for purging the fuel valves and the tubing or piping leading to the fuel valves.

Another challenge of these low flashpoint fuels is their relatively poor lubrication properties, which prevents the use of very small clearances between moving parts without applying a lubrication liquid.

Large low-speed uniflow turbocharged two-stroke internal combustion engines are typically used for the propulsion of large ocean going cargo ships and reliability is therefore of the utmost importance. Low flashpoint fuel operation of these engines is still a relatively recent development and reliability of the operation with low flash point fuel has not yet reached the level of conventional fuel. Therefore, most large low-speed two-stroke self-igniting internal combustion engines are dual fuel engines with a fuel system for operation on low flashpoint fuel and a fuel system for operation with fuel oil so that they can be operated at full power running on fuel oil only.

Due to the large diameter of the combustion chamber of these engines are typically provided with three (sometimes two) fuel injection valves per cylinder, separated by an angle of approximately 120° (180°) around the central exhaust valve. Thus, with a dual fuel system there will be three low flashpoint fuel valves per cylinder and three fuel oil valves per cylinder and thus, the top cover of the cylinder is a crowded place.

WO2013/086427 discloses a fuel valve for injecting low viscosity fuel such as e.g. ethanol by boosting the pressure of the ethanol with a pressure intensifier driven by pressurized diesel fuel as actuation liquid. The diesel fuel (actuation liquid) is delivered to the fuel valve at high pressure via an actuation liquid port. This known fuel valve uses the diesel fuel for actuation and lubrication but does not operate with a separate sealing liquid and does not have a separate sealing liquid port. The valve needle is received in a longitudinal bore in the nozzle and the fuel chamber is also located in the nozzle. This known fuel valve does not display a conduit connected to the sealing liquid port opening to the clearance between the booster piston and the bore in which the booster piston is received.

### DISCLOSURE

On this background, it is an object of the present application to provide a fuel valve for a large turbocharged self-igniting two-stroke internal combustion engine that overcomes or at least reduces the problems indicated above.

This object is according to one aspect achieved by providing a fuel valve for injecting low flashpoint liquid fuel into the combustion chamber of a large slow running two-stroke turbocharged self-igniting internal combustion engine, the fuel valve comprising: an elongated fuel valve housing with a rear end and a front end, a nozzle with a plurality of nozzle holes, the nozzle being disposed at the front end of the elongated valve housing, a fuel inlet port in the elongated fuel valve housing for connection to a source of pressurized liquid fuel, an actuation liquid port in the elongated fuel valve housing for connection to a source of actuation fluid, an axially displaceable valve needle slidably received in a longitudinal bore in the elongated valve housing, the valve needle having a closed position and an open position, the valve needle rests on a valve seat in the closed position and the valve needle has lift from the valve seat in the open position and the valve needle being biased towards the closed position, a fuel chamber, in the elongated valve housing, the fuel chamber surrounding the valve needle and opening to the valve seat, a pump piston received in a first bore in the valve housing with a pump chamber in the first bore on one side of the pump piston, an actuation piston received in a second bore in the valve housing with an actuation chamber in the second bore on one side of the actuation piston, the pump piston being connected to the actuation piston to move in unison therewith, the actuation chamber being connected to the actuation liquid port, the pump chamber having an outlet connected to the fuel chamber and an inlet connected to the fuel inlet port, a sealing liquid inlet port for connection to a source of pressurized sealing liquid, a conduit connecting the sealing liquid inlet port to the first bore, the conduit opening to the clearance between the first bore and the pump piston for sealing the pump piston in the first bore.

By providing a fuel valve with an integrated fuel pump that with a pump piston that is sealed by providing pressurized sealing liquid from a source of pressurized sealing liquid into the clearance between the bore in which the pump piston is received and the pump piston a fuel valve is obtained that can handle low flashpoint fuels and overcome or at least reduce several of the problems indicated above.

In a second possible implementation of the first aspect the fuel valve further comprises a sealing liquid pressure booster with an actuation chamber connected to the actuation liquid port.

In a third possible implementation of the first aspect the non-return valve further comprise a booster chamber connected to the sealing liquid inlet port via a non-return valve and to the clearance between the first bore and the pump piston.

In a fourth possible implementation of the first aspect the sealing liquid pressure booster is configured to boost the pressure of the sealing liquid during a pump stoke of the pump piston.

In a fifth possible implementation of the first aspect the sealing liquid pressure booster is configured to boost the pressure of the sealing liquid to a pressure above the maximum pressure of the fuel in the pump chamber.

In a sixth possible implementation of the first aspect the clearance between the first bore and the pump piston is a narrow clearance that requires lubrication which is provided by the sealing liquid.

In a seventh possible implementation of the first aspect the pump piston has an upper part with a slightly enlarged diameter compared the diameter of the lower part of the pump piston, the upper part of the bore 81 in which the pump piston is received has a correspondingly enlarged diameter, whilst the lower part of the bore has a diameter thereby forming a ring chamber.

In an eighth possible implementation of the first aspect the upper part of the pump piston forms a sealing liquid booster piston that reduces the volume of the ring chamber when the pump piston makes a pump stroke, the ring chamber being connected to a source of sealing liquid via a non-return valve.

The object above is also achieved according to a second aspect by providing a low flashpoint fuel supply system including a fuel valve according to claim 1 or 2, further comprising a source of sealing liquid with a controlled pressure Psl and a source of liquid fuel with a controlled pressure Pf, wherein Psl is higher than Pf.

In a first possible implementation of the second aspect Psl is lower than the maximum pressure in the pump chamber during a pump stroke, and wherein Psl, the size of the clearance and the maximum pressure in the pump chamber during a pump stoke are interdependently selected such that fuel enters the clearance and replaces the sealing liquid along a portion but not all of the length of the pump piston and wherein the sealing liquid replaces substantially all fuel in the clearance before another pump stroke takes place.

Further objects, features, advantages and properties of the fuel valve and fuel supply system according to the present disclosure will become apparent from the detailed description.

### BRIEF DESCRIPTION OF THE DRAWINGS

In the following detailed portion of the present description, the invention will be explained in more detail with reference to the exemplary embodiments shown in the drawings, in which:
Fig. 1 is a front view of a large two-stroke diesel engine according to an example embodiment,
Fig. 2 is a side view of the large two-stroke engine of Fig. 1,
Fig. 3 is a diagrammatic representation the large two-stroke engine according to Fig. 1, and
Fig. 4 is a diagrammatic representation of an example embodiment of low flashpoint liquid fuel system of the engine of Fig. 1 for one fuel valve,
Fig. 5 is a sectional view in diagrammatic representation of an example embodiment of low flashpoint liquid fuel system of the engine of Fig. 1 of the upper part of a cylinder,
Fig. 6 is an elevated view of the low flashpoint fuel valve for using an engine according to Figs. 1-3 to an example embodiment,
Fig. 7 is sectional view of a low flashpoint fuel injection valve shown in Fig. 6,
Fig. 7A shows an enlarged detail of Fig. 7,
Fig. 7B shows another enlarged detail of Fig. 7, Fig. 8 is a different sectional view of a low flashpoint fuel injection valve shown in Fig. 6,
Fig. 9 is another different sectional view of a low flashpoint fuel injection valve shown in Fig. 6,
Fig. 9A shows an enlarged detail of Fig. 9.
Fig. 10 is another different sectional view of a low flashpoint fuel injection valve shown in Fig. 6, and
Fig. 11 is another different sectional view of a low flashpoint fuel injection valve shown in Fig. 6.

### DETAILED DESCRIPTION

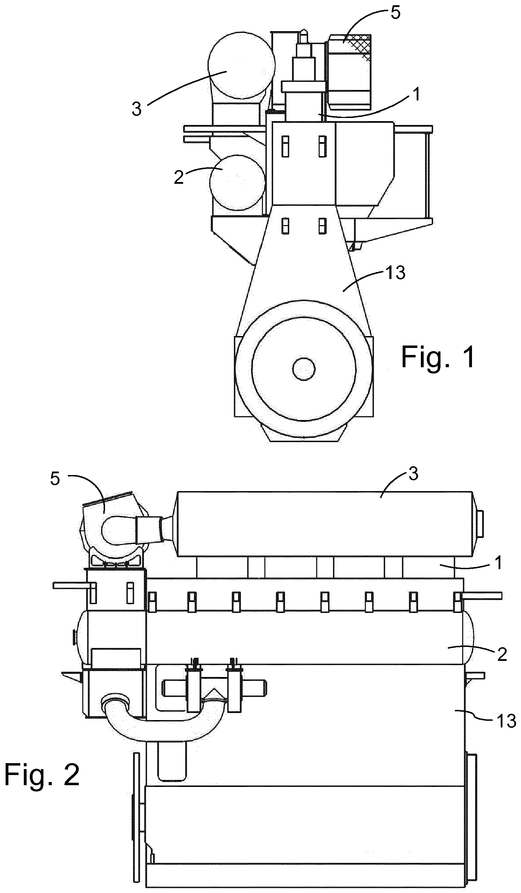

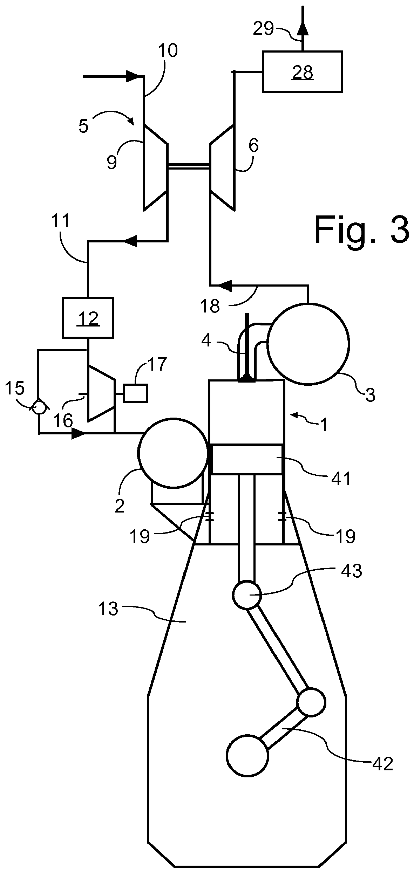

In the following detailed description, the self-igniting internal combustion engine will be described with reference to a large two-stroke low-speed turbocharged internal combustion (Diesel) engine in the example embodiments. Figs. 1, 2 and 3 show a large low-speed turbocharged two-stroke diesel engine with a crankshaft 42 and crossheads 43. Fig. 3 shows a diagrammatic representation of a large low-speed turbocharged two-stroke diesel engine with its intake and exhaust systems. In this example embodiment the engine has four cylinders 1 in line. Large low-speed turbocharged two-stroke diesel engines have typically between four and fourteen cylinders in line, carried by an engine frame 13. The engine may e.g. be used as the main engine in an ocean going vessel or as a stationary engine for operating a generator in a power station. The total output of the engine may, for example, range from 1,000 to 110,000 kW.

The engine is in this example embodiment a diesel (self-igniting) engine of the two-stroke uniflow type with scavenge ports 19 at the lower region of the cylinders 1 and a central exhaust valve 4 at the top of the cylinders 1. The scavenge air is passed from the scavenge air receiver 2 to the scavenge ports 19 of the individual cylinders 1. A piston 41 in the cylinder 1 compresses the scavenge air, fuel is injected from fuel injection valves (described in detail further below), in the cylinder cover (described in detail further below), combustion follows and exhaust gas is generated. When an exhaust valve 4 is opened, the exhaust gas flows through an exhaust duct associated with the cylinder 1 into the exhaust gas receiver 3 and onwards through a first exhaust conduit 18 to a turbine 6 of the turbocharger 5, from which the exhaust gas flows away through a second exhaust conduit via an economizer 28 to an outlet 29 and into the atmosphere. Through a shaft, the turbine 6 drives a compressor 9 supplied with fresh air via an air inlet 10. The compressor 9 delivers pressurized scavenge air to a scavenge air conduit 11 leading to the scavenge air receiver 2.

The scavenge air in conduit 11 passes an intercooler 12 for cooling the scavenge air. In an example embodiment the scavenge air leaves the compressor at approximately 200 °C and is cooled to a temperature between 36 and 80 °C by the intercooler.

The cooled scavenge air passes via an auxiliary blower 16 driven by an electric motor 17 that pressurizes the scavenge air flow when the compressor 9 of the turbocharger 5 does not deliver sufficient pressure for the scavenge air receiver 2, i.e. in low or partial load conditions of the engine. At higher engine loads the turbocharger compressor 9 delivers sufficient compressed scavenge air and then the auxiliary blower 16 is bypassed via a non-return valve 15.

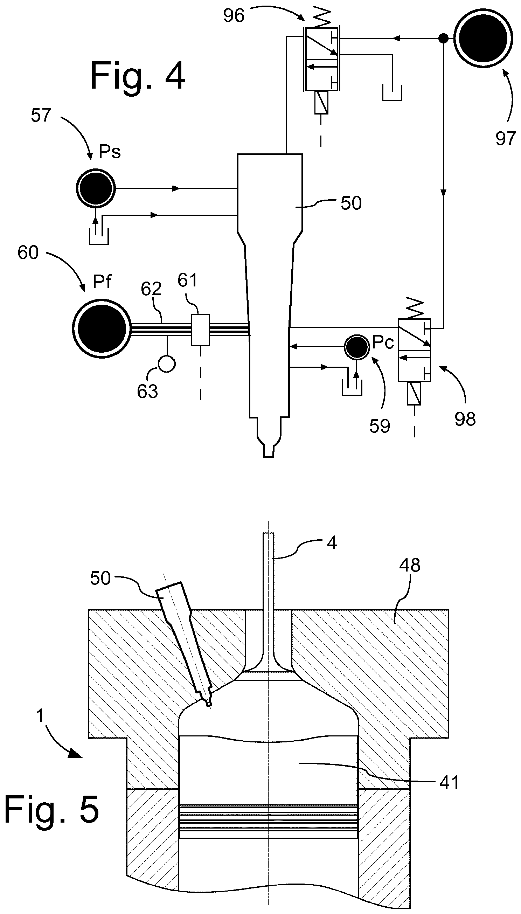

Fig. 4 is a diagrammatic representation of a low flashpoint liquid fuel valve 50 with its connections to the source of low flashpoint liquid fuel 60, to the source of cooling liquid (oil) 59, to the source of sealing liquid 57, to a source of actuation liquid (oil) 97 via a control valve 96, to a purge control valve 98, and an actuation liquid control valve 96. A conduit 62 leads from the source of pressurized low flashpoint liquid fuel 62 to the inlet port in the housing of the low flashpoint liquid fuel valve 50. Conduit 62 is a double walled conduit, e.g. formed by concentric tubes or by a tube inside a solid block material such as the cylinder cover 48. The low flashpoint liquid fuel is transported in the inner lumen/tube and the outer lumen is vented and provided with a sensor 63 for detecting volatile hydrocarbon components (sniffer). The sensor 63 is connected to an electronic control unit that issues an alarm when volatile hydrocarbon components are detected by the sensor 63. A window valve 61 is provided in the conduit 62 for being able to disconnect the fuel valve 50 from the source of low flashpoint liquid fuel 60 for being able to purge the fuel valve 50 from the low flashpoint fuel. The window valve 61 is preferably electronically operated and controlled by the electronic control unit. The control of 96 controls the injection events and the control valve 98 controls purging by preventing a non-return valve from closing.

Fig. 5 shows the top of one of the plurality of cylinders 1 according to an example embodiment. The top cover 48 of the cylinders 1 is provided with a number (typically 2 or 3) of fuel valves 50 for injecting a low flashpoint liquid fuel from a nozzle of the fuel valves 50, into the combustion chamber above the piston 41 in the cylinder 1.

In this example embodiment the engine has three low flashpoint liquid fuel valves 50 per cylinder, but it should be understood that a single or two low flashpoint fuel valves 50 may be sufficient, depending on the size of the combustion chamber. The exhaust valve 4 is placed centrally in the top cover with the low flashpoint liquid fuel valves 50 closer to the cylinder wall.

In an embodiment (not shown), two or three fuel oil valves can be provided in the top cover 48 for operation of the engine on fuel oil. The fuel oil valves are connected to a source of high pressure fuel oil in a well-known manner.

The forward portion of the fuel valve 50 that is closest to the nozzle and closest to the combustion chamber is cooled using a cooling liquid, such as cooling oil, for which system oil (lubrication oil) can be used. Hereto, the body of the fuel valve 50 is provided with a cooling liquid inlet port and a cooling liquid outlet port and a flow path (not shown) between the inlet port and the outlet port through the forward portion of the body of the fuel valve 50. The cooling liquid inlet port is connected via a conduit to a source of pressurized cooling liquid 59, such as system oil, and the cooling liquid outlet port is connected via a conduit to a reservoir of cooling liquid.

The body of the fuel valve 50 is also provided with a actuation liquid port for controlling the opening and closing of the fuel valve. The control port is connected via a conduit to the source of pressurized actuation liquid 97. The electronically controlled control valve 96, preferably a proportional valve, is placed in the conduit between the source of pressurized actuation liquid 97 and the actuation liquid port for controlling the opening and closing of the fuel valve 50, i.e. for controlling injection event.

The engine is provided with an electronic control unit that controls the operation of the engine. Signal lines connect the electronic control unit to the control valves 96 and 98 and to the window valves 61.

The electronic control unit is configured to time the injection events of the low flashpoint liquid fuel valve 50 correctly and to control the dosage (volume injected per injection event) of the low flashpoint liquid fuel with the fuel valves 50. The electronic control unit is in an embodiment configured to control the shape of the injection curve (rate shaping), since the fuel valve is capable of adapting to such curves.

The electronic control unit opens and closes the window valve 61 so as to ensure that the supply conduit 62 is filled with pressurized low flashpoint liquid fuel before the start of a fuel injection event.

The window valve 61 is closed by the electronic control unit when the fuel valve 50 needs to be purged from low flashpoint fuel.

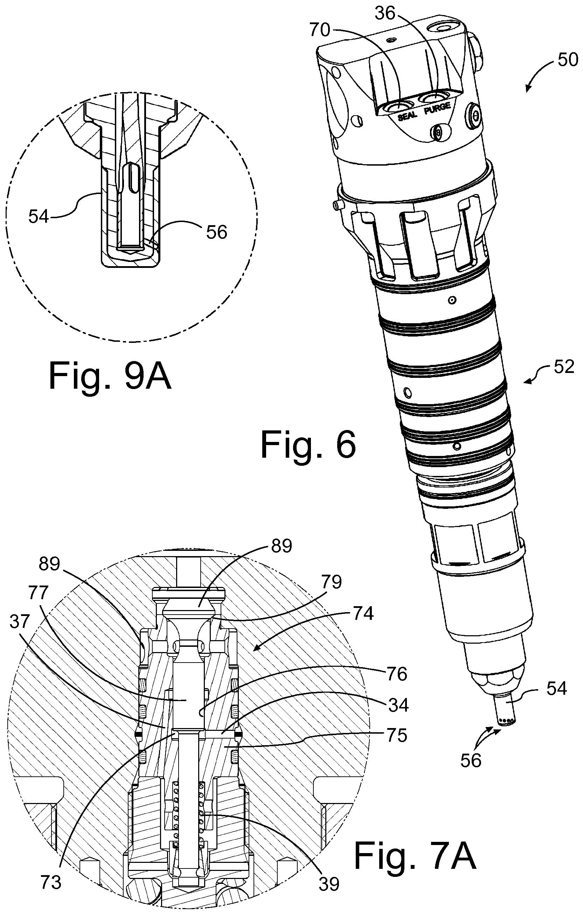

Fig. 6 is a perspective view of the fuel valve 50 with its elongated valve housing 52, a nozzle 54 mounted to the front end of the elongated valve housing 52 and a sealing liquid port 70 and a control port 36 for controlling purging. The nozzle 54 is provided with a plurality of nozzle holes 56 that are radially and axially distributed over the nozzle 54.

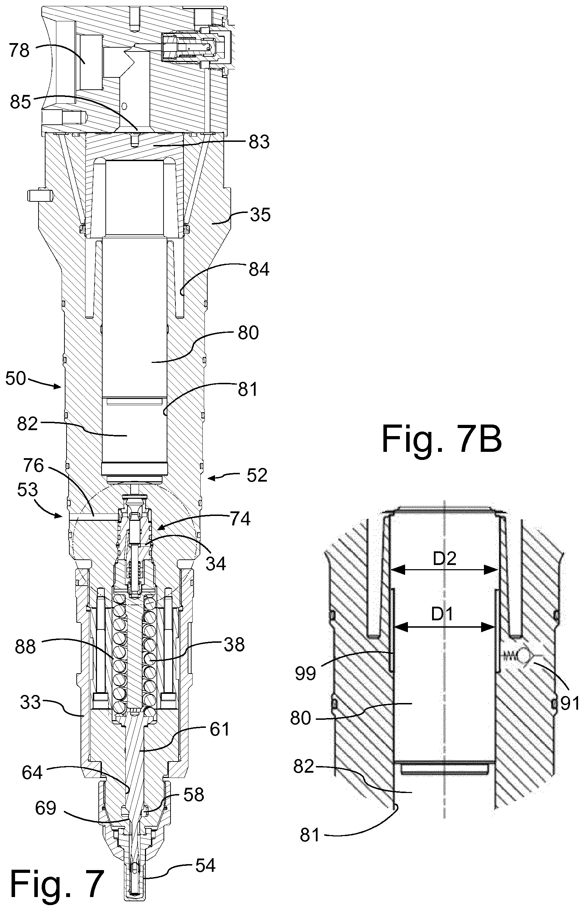

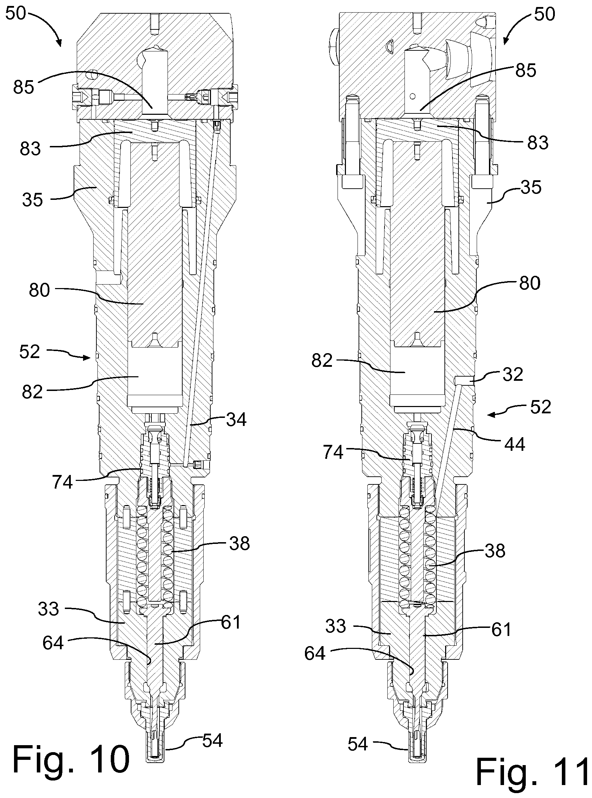

Figs. 7,8,9,10 and 11 show sectional views of a fuel valve 50 for injecting low flashpoint fuel into the combustion chamber of a self-igniting internal combustion engine. The fuel valve 50 has an elongated valve housing 52 with a rearmost end and a nozzle 54 at its front end. The nozzle 54 is s separate body that is attached to the front end of the valve housing 52. The rearmost end of the valve housing 52 is provided with a plurality of ports, including a control port 36, an actuation liquid port 78 and a gas leak detection port (not shown). The rearmost end is enlarged to form a head that protrudes from the cylinder cover 48 when the fuel valve 50 is mounted in the cylinder cover 48. In the present embodiment, the fuel valves 50 are placed around the central exhaust valve 4, i.e. relatively close to the wall of the cylinder liner. The elongated valve housing 52 and the other components of the fuel injection valve 50, as well as the nozzle are in embodiment made of steel, such as e.g. tool steel and stainless steel.

The hollow nozzle 54 is provided with nozzle holes 56 that are connected to the hollow interior in the nozzle 54 and the nozzle holes 56 are distributed radially over the nozzle 54. The nozzles are axially close to the tip 59 and the radial distribution of the nozzle holes 56 is in the present embodiment over a relatively narrow range of approximately 50°. The radial orientation of the nozzle holes 56 is such that the nozzles holes 56 are directed away from the wall of the cylinder liner. Further, the nozzle holes 56 are directed such that they are roughly in the same direction as the direction of the swirl of the scavenge air in the combustion chamber caused by the configuration of the scavenge ports (this swirl is a well-known feature of large two-stroke turbocharged internal combustion engines of the journey flow type).

The tip of the nozzle 54 is in this embodiment closed. The nozzle 54 is connected to the front end of the valve housing 52 with the hollow interior of the nozzle 54 opening towards a longitudinal bore 64 in the housing 52. A valve seat 69 is disposed at the transition between the longitudinal bore 64 and a fuel chamber 58.

An axially displaceable valve needle 61 is slidably received with a narrow clearance in a longitudinal bore in the elongated valve housing 52, and lubrication between the axially displaceable valve needle 61 and the longitudinal bore is critical. Hereto, pressurized sealing liquid is delivered to the clearance between the longitudinal bore in the valve needle via a conduit (channel) 47. The channel connects the clearance between the valve needle 61 and the axial bore to the sealing liquid inlet port 70, which in turn can be connected to the source of pressurized sealing liquid 57 which is pressurized and a pressure Ps. The sealing liquid prevents leakage of low flashpoint fuel to the clearance between the valve needle 61 and the axial bore. Further, the sealing liquid, which is preferably an oil, provides for lubrication between the valve needle 61 and the axial bore. In an embodiment, the pressure of the source of sealing liquid 57 is at least almost as high as the maximum pressure in the pump chamber 82 during an injection event.

The valve needle 61 has a closed position and an open position. The valve needle 61 is provided with a conical section that is shaped to match the valve seat 69. In the closed position the conical section of the valve needle rests on the valve seat 69. The conical section has lift from the valve seat 69 in the open position and the valve needle 61 is resiliently biased towards the closed position by a pre-tensioned helical spring 38. The pre-tensioned helical spring 38 acts on the valve needle 61 and biases the valve needle 61 towards its closed position where the conical section rest on the seat 69.

The helical spring 38 is a helical wire spring that is received in a spring chamber 88 in the elongated fuel valve housing 52. Cooling oil flows through the spring chamber 88. One end of the helical spring 38 engages an end of the spring chamber 88 and the other end of the helical spring 38 engages a widened section or flange on the valve needle 61, thereby resiliently urging the valve needle towards the valve seat 69.

The elongated valve housing 52 is provided with a fuel inlet port 53 for connection to a source of pressurized low flashpoint liquid fuel 60, for example via the low flashpoint liquid fuel supply conduit 62. The fuel inlet port 53 connects to a pump chamber 82 in the valve housing 52 via a conduit 76 and a non-return valve 74. The non-return valve 74 (suction valve) is provided inside the valve housing 52. The non-return valve 74 ensures that liquid low flashpoint fuel can flow through the conduit 76 to the pump chamber 82, but not in the opposite direction.

A pump piston 80 is slidably and sealingly received in a first bore 81 in the elongated fuel valve housing 52 with a pump chamber 82 in the first bore 81 on one side of the pump piston 80. An actuation piston 83 is slidably and sealingly received in a second bore 84 in the valve housing 52 with an actuation chamber 85 in the second bore 84 on one side of the actuation piston 83. The pump piston 80 is connected to the actuation piston 83 to move in unison therewith, i.e. the pump piston 80 and the actuation piston 83 can slide in unison their respective bores 81,84. In the present embodiment the pump piston 80 and the actuation piston 83 performed by a single body, however, it is noted that the pump piston 80 and the actuation piston 83 can be separate interconnected bodies.

In an embodiment, shown in Fig. 7B, the pump piston 80 has an upper part with a slightly enlarged diameter D2 compared the diameter D1 of the lower part of the pump piston 80. The upper part of the bore 81 in which the pump piston 80 is received has a correspondingly enlarged diameter D2, whilst the lower part of the bore 81 has a diameter D1. Thus, a ring chamber 99 is created and the upper part of the pump piston 80 forms a sealing liquid booster piston that reduces the volume of the ring chamber 99 when the pump piston 80 is moved downwards (up and down as in Figs. 7 and 7B). The ring chamber 99 is connected to a source of sealing liquid (oil) via a non-return valve 91. The ring chamber 99 is filled with sealing liquid via the non-return valve 91 when the pump piston 80 moves upwards, but the non-return valve 91 prevents return flow of the sealing liquid and thus the sealing liquid is pressed into the clearance between the pump piston 80 and the bore 81. Thus, sealing liquid is forced from the ring chamber 99 into the clearance between the pump piston 80 and the bore 81, thereby preventing that low flashpoint fuel enters into the clearance between the pump piston 80 and the bore 81. By selecting the clearance for the lower part of the pump piston 80 slightly larger than the clearance for the upper part of the pump piston 80 it can be ensured that most of the sealing liquid flows through the clearance towards the pump chamber 82. Excess sealing liquid will mix with the fuel in the pump chamber and be combusted.

The actuation chamber 85 is fluidically connected to an actuation liquid port 78. The electronic control valve 96 controls the flow pressurized actuation liquid to and from the actuation liquid port 78 and thereby to and from to the actuation chamber 85.

At the start of injection event, the electronic control unit commands the electronic control valve 96 to allow actuation liquid into the actuation chamber 85. The pressurized actuation liquid in the actuation chamber 85 acts on the actuation piston 83, thereby creating a force that urges the pump piston 80 into the pump chamber 82. Thereby the pressure of the low flashpoint liquid fuel in the pump chamber 82 increases. In embodiment the diameter of the actuation piston 83 is larger than the diameter of the pump piston 80 and thus the pressure in the pump chamber 82 will be correspondingly higher than the pressure in the actuation chamber 85 and the combination of the actuation piston 83 and pump piston 80 acts as a pressure booster.

One or more channels (conduits) 57 fluidically connect the pump chamber 82 to the fuel chamber 58 and thereby to the valve seat 69 that is located at the bottom of the fuel chamber. The valve seat 69 faces the fuel chamber 58 that surrounds the valve needle 61. The valve needle 61 is configured to move away from the nozzle 54 to obtain lift, and towards the nozzle 54 to reduce lift. In its open position the valve needle 61 has lift from the seat 69 thereby allowing flow of low flashpoint liquid fuel from the pump chamber 82 to the fuel chamber 58, past the valve seat 69 and via an axial bore to the hollow interior of the nozzle 54. The low flashpoint liquid leaves the nozzle via the nozzle holes 56.

The valve needle 61 gets lift when the pressure of the low flashpoint liquid fuel in the pump chamber 82 exceeds the force of the helical spring 38. Thus, the valve needle 61 is configured to open against the bias of the spring 38 when the pressure of the fuel in the pump chamber 82 in exceeds a predetermined threshold. The pressure in the fuel is caused by the pump piston 80 acting on the low flashpoint liquid fuel in the pump chamber 82.

The valve needle 61 is configured to be biased to move towards the nozzle 54 with the conical section moving towards the valve seat 69. This happens when the pressure in the low flashpoint liquid fuel decreases when the pump piston 80 no longer acts on the fuel in the pump chamber 82 and the closing force of the helical spring 38 on the valve needle 61 becomes larger than the opening force of the low flashpoint liquid fuel on the valve needle 61.

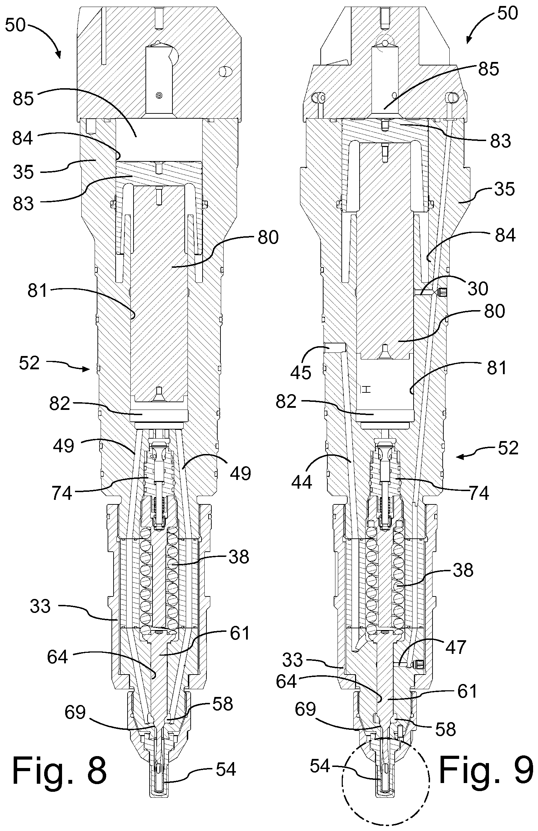

When the electronic control unit ends an injection event it commands the control valve 96 to connect the actuation chamber 85 to tank. The pump chamber 82 is connected to the pressurized source of low flashpoint liquid 60 and the supply pressure of the low flashpoint liquid fuel that flows in via the non-return valve 74 will urge actuation piston 83 into the actuation chamber 85 until it has reached the position that is shown in Fig. 7 with the pump chamber 82 completely filled with low flashpoint liquid fuel so that the fuel valve 50 is ready for the next injection event. Fig. 8 shows the position of the pump piston 80 and the actuation position 83 near the end of an injection event with a major part of the pump chamber 80 depleted from low flashpoint liquid.

An injection event of the low flashpoint fuel is controlled by the electronic control unit ECU through the length of the activation timing and the length of the stroke of the pump piston 80 (rate shaping). The amount of low flashpoint liquid fuel injected in one injection event is determined by the length of the stroke of the pump piston 80. Thus, upon a signal from the electronic control unit the actuation liquid pressure is raised in the actuation chamber 85.

At the end of the injection event the removes the pressure from the actuation chamber 85 and the force of the pressurized low flashpoint liquid fuel in the pump chamber 82 causes the actuation piston 83 to be pushed back in the second bore 85 until it hits the end of the second bore 85 and the pump chamber 82 is completely filled with low flashpoint liquid fuel and the fuel valve 50 is ready for the next injection event.

In an embodiment (not shown) the fuel valve 50 comprises pressure booster form of a plunger with two different diameters, with the large diameter part of the plunger facing a chamber with a port that is connected to the control valve 96 and the larger diameter part of the plunger facing a chamber with a port that is connected to the conduits (channel) 76 and 47 so as to boost the sealing pressure during a fuel injection event thus ensuring that the sealing liquid pressure is high exactly at the time when it is most needed to provide high sealing pressure.

The fuel valve 50 is provided with a sealing oil inlet port 70 for connection to a source of pressurized sealing liquid and provided with a conduit 76 extending from the sealing liquid inlet port 70 to that first bore 81 for sealing the pump piston 80 in the first bore 81. In an embodiment, the pressure of the source of sealing liquid 57 is at least almost as high as the maximum pressure in the pump chamber 82 during an injection event.

In an embodiment, the fuel valve 50 is provided with means to selectively allow flow from the pump chamber 82 towards the fuel inlet port 53 for purging the fuel valve 50. The means to selectively allow flow from the pump chamber 82 towards the fuel inlet port 53 comprise means to selectively deactivate the non-return function of the non-return valve 74 (suction valve).

As shown in Fig. 7A the non-return valve 74 is provided with a valve member 77 can be moved between an open position and a closed position. The valve member 77 is biased to the closed position, by a pre-tensioned helical spring 39. The valve member 77 is configured to be urged to the open position when the pressure in the fuel inlet port 53 is higher than the pressure in the pump chamber 82 and the valve member 77 being configured to be urged to the closed position by the force of the helical spring 39 when the pressure in the pump chamber 82 is higher than the pressure in the fuel inlet port 53. The valve member 77 is provided with a valve head 89 at one of his longitudinal ends whilst the helical spring 39 engages the valve member 77 at its opposite longitudinal end. The valve member 77 is slidably and sealingly received in a bore 76 in a non-return valve housing 75. One end of the valve bore forms a seat 79 for the valve disk 89 of the valve member 77, with the valve disk 89 resting on the valve seat 79 in the closed position of the movable valve member and the valve disk 89 having lift from the valve seat 79 in open positions of the valve member 77.

The valve member 77 is configured to move to its open position by means of a control signal, regardless of the pressure in the pump chamber 82. Hereto the movable valve member 77 is provided with a pressure surface facing a control chamber 73 in the non-return valve 74.

The control chamber 73 is disposed in the valve bore 76 and the movable valve member 77 comprises a plunger section on one side of the control chamber 73. The non-return valve housing 75 comprises a cylindrical portion and the non-return valve housing 75 is received in a matching longitudinal bore in the elongated valve housing 52.

The control chamber 73 is fluidically connected to a control port 36 in the elongated fuel valve housing 52 via a channel (not shown) for connection to a source of control liquid. The control port 36 receives control liquid from the source of actuation liquid 97 via a conduit that includes an electronically controlled control valve 98 that is preferably of the on/off type. The control valve 98 is connected to the electronic control unit and the electronic control unit commands the control valve 98 to move to its open position when it is time to purge the fuel valve 50. The control port 36 is connected to the control chamber 73 of the non-return valve 74 via a channel or conduit 34. When the electronic control unit commands the control valve 98 to move to its open position pressurized control/actuation liquid (oil) will reach the control chamber 73 and force the valve member 77 to the open position against the force of the helical wire spring 39 and the valve member 77 in the open position also when liquid flows from the pump chamber 82 towards the low flashpoint fuel port 53, i.e. against the normally blocked direction of the non-return valve 74. This allows the fuel valve 50 to be purged from low flashpoint fuel.

The valve needle 69 is configured to move from the closed position to the open position against the bias when the pressure in the fuel chamber 82 exceeds a predetermined threshold. The predetermined threshold is set at a suitable injection pressure that is lower than the maximum pressure that can be generated in the pump chamber 82.

The elongated valve housing 52 is in an embodiment provided with a cooling liquid inlet port 45 and a cooling liquid outlet port 32 and a cooling liquid flow path 44 for cooling the fuel injection valve 50, in particular the portion of the fuel valve 50 closest to the front end, e.g. closest to the nozzle and the heat from the combustion chamber. The cooling liquid is in an embodiment system lubrication oil from the engine. In an embodiment the cooling liquid flow path includes the spring chamber 88r in which the helical spring 38 is received. In embodiment the cooling liquid flow path connects to a conduit 37 that needs to the valve bore 76 for providing sealing liquid to the clearance between the valve member 77 and the valve bore 76. For this purpose, the pressure Pf of the source of low flashpoint fuel 60 is slightly below the pressure PC of the source of cooling liquid 59.

In an embodiment the elongated valve housing 52 comprises a front portion 33 that is connected to a rear portion 35. The axially displaceable valve needle 61 being disposed in the front portion 33, the first bore 81, the second bore 84 and the matching longitudinal bore being formed in the rear portion 35.

The fuel valve 50 is in an embodiment provided a conduit 47 extending from the sealing liquid inlet port 70 to the longitudinal needle bore 64 for sealing the valve needle 61 in the longitudinal needle bore 64.

In an embodiment the fuel valve 50 is provided with a dedicated control valve in a fluidic connection between the pump chamber 82 and the fuel inlet port 53 for selectively allowing flow from the pump chamber 82 to the fuel inlet port 53 for purging of the fuel valve 50. This control valve is preferably opened and closed in response to a control signal. In this embodiment is not necessary to provide means to selectively deactivate the non-return function of the non-return valve 74.

In an embodiment the fuel valve 50 is provided a sealing liquid pressure booster (not shown) with an actuation chamber connected to the actuation liquid port. Preferably, the fuel valve 50 is provided with a booster chamber connected to the sealing liquid inlet port 70 via a non-return valve (not shown) and to the clearance between the first bore 81 and the pump piston 80. The sealing liquid pressure booster is configured to boost the pressure of the sealing liquid during a pump stoke of the pump piston (80), and to keep the boosted pressure of the sealing liquid sliding above the pressure in the pump chamber 82 and anytime during a fuel injection event. Preferably, sealing liquid pressure booster is configured to boost the pressure of the sealing liquid to a pressure above the maximum pressure of the fuel in the pump chamber 82.

In an embodiment the source of sealing liquid has a controlled pressure Psl and a source of liquid fuel has a controlled pressure Pf, with Psl the entire higher than Pf. In this embodiment the controlled pressure Psl can be lower than the maximum pressure in the pump chamber 82 during a pump stroke. In this case Psl, the size of the clearance and the maximum pressure in the pump chamber 82 during a pump stoke are interdependently selected such that low flashpoint liquid fuel enters the clearance and replaces the sealing liquid along a portion but not all of the length of the pump piston 80 and wherein the sealing liquid replaces substantially all low flashpoint fuel in the clearance before another pump stroke takes place, any interest of low flashpoint fuel so that there will not be into the sealing oil system itself.

Figs. 9 to 11 illustrate different sectional views of the low flashpoint fuel injection valve shown in Fig. 6. Fig. 9A shows an enlarged detail of Fig. 9.

The term "comprising" as used in the claims does not exclude other elements or steps. The term "a" or "an" as used in the claims does not exclude a plurality. The electronic control unit may fulfill the functions of several means recited in the claims.

The reference signs used in the claims shall not be construed as limiting the scope. Although the present invention has been described in detail for purpose of illustration, it is understood that such detail is solely for that purpose, and variations can be made therein by those skilled in the art without departing from the scope of the invention.

## Claims

1. A fuel valve (50) for injecting low flashpoint liquid fuel into the combustion chamber of a large slow running two-stroke turbocharged self-igniting internal combustion engine, said fuel valve (50) comprising:
an elongated fuel valve housing (52) with a rear end and a front end,
a nozzle (54) with a plurality of nozzle holes (56), said nozzle (54) being disposed at the front end of said elongated valve housing (52),
a fuel inlet port (53) in said elongated fuel valve housing (52) for connection to a source (60) of pressurized liquid fuel,
an actuation liquid port (78) in said elongated fuel valve housing (52) for connection to a source of actuation fluid (97),
an axially displaceable valve needle (61) slidably received in a longitudinal bore (64) **in said elongated valve housing (52),** said valve needle (61) having a closed position and an open position,
said valve needle (61) rests on a valve seat (69) in said closed position and said valve needle (61) has lift from said valve seat (69) in said open position and said valve needle (61) being biased towards said closed position,
a fuel chamber (58) in said elongated valve housing (52), said fuel chamber (58) surrounding said valve needle (61) and opening to said valve seat (69), a pump piston (80) received in a first bore (81) in said valve housing with a pump chamber (82) in said first bore (81) on one side of said pump piston (80),
an actuation piston (83) received in a second bore (84) in said valve housing (52) with an actuation chamber (85) in said second bore (84) on one side of said actuation piston (83),
said pump piston (80) being connected to said actuation piston (83) to move in unison therewith,
said actuation chamber (85) being connected to said actuation liquid port (78),
said pump chamber (82) having an outlet connected to said fuel chamber (58) and an inlet connected to said fuel inlet port (53),
**a sealing liquid inlet port (70)** for connection to a source of pressurized sealing liquid (57),
a conduit (30) connecting said sealing liquid inlet port (70) to said first bore (81), said conduit (30) opens to the clearance between said first bore (81) and said pump piston (80) for sealing said pump piston (80) in said first bore.

2. A fuel valve (50) according to claim 1, further comprising a sealing liquid pressure booster with an actuation chamber connected to said actuation liquid port.

3. A fuel valve (50) according to claim 2, further comprising a booster chamber connected to said sealing liquid inlet port (70) via a non-return valve and to said clearance between said first bore (81) and said pump piston (80).

4. A fuel valve (50) according to claim 2 or 3, wherein said sealing liquid pressure booster is configured to boost the pressure of said sealing liquid during a pump stoke of said pump piston (80).

5. A fuel valve (50) according to claim 4, wherein said sealing liquid pressure booster is configured to boost the pressure of said sealing liquid to a pressure above the maximum pressure of the fuel in said pump chamber (82).

6. A fuel valve (50) according to any one of the preceding claims, wherein said clearance between said first bore (81) and said pump piston (80) is a narrow clearance that requires lubrication which is provided by the sealing liquid.

7. A fuel valve (50) according to any one of the preceding claims, wherein the pump piston (80) has an upper part with a slightly enlarged diameter (D2) compared the diameter (D1) of the lower part of the pump piston (80), the upper part of the bore (81) in which the pump piston (80) is received has a correspondingly enlarged diameter (D2), whilst the lower part of the bore (81) has a diameter D1 thereby forming a ring chamber (99).

8. A fuel valve (50) according to claim 7, wherein the upper part of the pump piston (80) forms a sealing liquid booster piston that reduces the volume of the ring chamber (99) when the pump piston (80) makes a pump stroke, the ring chamber (99) being connected to a source of sealing liquid via a non-return valve (91).

9. A low flashpoint fuel supply system including a fuel valve (50) according to claim 1 or 2, further comprising a source of sealing liquid with a controlled pressure Psl and a source of liquid fuel with a controlled pressure Pf, wherein Psl is higher than Pf.

10. A low flashpoint fuel supply system according to claim 7, wherein Psl is lower than the maximum pressure in the pump chamber (82) during a pump stroke, and wherein Psl, the size of said clearance and the maximum pressure in said pump chamber (82) during a pump stoke are interdependently selected such that fuel enters said clearance and replaces said sealing liquid along a portion but not all of the length of said pump piston (80) and wherein said sealing liquid replaces substantially all fuel in said clearance before another pump stroke takes place.

## Patentansprüche

1. Kraftstoffventil (50) zum Einspritzen eines flüssigen Kraftstoffs mit niedrigem Flammpunkt in die Verbrennungskammer eines großen langsam laufenden aufgeladenen selbstzündenden Zweitakt-Verbrennungsmotors, wobei das Kraftstoffventil (50) umfasst:
ein längliches Kraftstoffventilgehäuse (52) mit einem hinteren Ende und einem vorderen Ende,
eine Düse (54) mit mehreren Düsenlöchern (56), wobei die Düse (54) am vorderen Ende des länglichen Ventilgehäuses (52) angeordnet ist,
eine Kraftstoffeinlassöffnung (53) in dem länglichen Kraftstoffventilgehäuse (52) für eine Verbindung mit einer Quelle (60) von unter Druck stehendem flüssigen Kraftstoff,
eine Betätigungsflüssigkeitsöffnung (78) in dem länglichen Kraftstoffventilgehäuse (52) für eine Verbindung mit einer Quelle von Betätigungsfluid (97),
eine axial verschiebbare Ventilnadel (61), die gleitbar in einer Längsbohrung (64) in dem länglichen Ventilgehäuse (52) aufgenommen ist, wobei die Ventilnadel (61) eine geschlossene Position und eine offene Position aufweist,
wobei die Ventilnadel (61) auf einem Ventilsitz (69) in der geschlossenen Position sitzt und die Ventilnadel (61) von dem Ventilsitz (69) in der offenen Position angehoben ist und die Ventilnadel (61) zu der geschlossenen Position hin vorgespannt ist,
eine Kraftstoffkammer (58) in dem länglichen Ventilgehäuse (52), wobei die Kraftstoffkammer (58) die Ventilnadel (61) umgibt und sich zum Ventilsitz (69) öffnet, wobei ein Pumpenkolben (80) in einer ersten Bohrung (81) in dem Ventilgehäuse mit einer Pumpenkammer (82) in der ersten Bohrung (81) auf einer Seite des Pumpenkolbens (80) aufgenommen ist,
einen Betätigungskolben (83), der in einer zweiten Bohrung (84) in dem Ventilgehäuse (52) mit einer Betätigungskammer (85) in der zweiten Bohrung (84) auf einer Seite des Betätigungskolbens (83) aufgenommen ist,
wobei der Pumpenkolben (80) mit dem Betätigungskolben (83) verbunden ist, um sich gemeinsam mit diesem zu bewegen,
wobei die Betätigungskammer (85) mit der Betätigungsflüssigkeitsöffnung (78) verbunden ist,
wobei die Pumpenkammer (82) einen Auslass, der mit der Kraftstoffkammer (58) verbunden ist, und einen Einlass, der mit der Kraftstoffeinlassöffnung (53) verbunden ist, aufweist,
eine Dichtungsflüssigkeits-Einlassöffnung (70) für eine Verbindung mit einer Quelle von unter Druck stehender Dichtungsflüssigkeit (57),
eine Leitung (30), welche die Dichtungsflüssigkeits-Einlassöffnung (70) mit der ersten Bohrung (81) verbindet,
wobei sich die Leitung (30) zu dem Zwischenraum zwischen der ersten Bohrung (81) und dem Pumpenkolben (80) zum Abdichten des Pumpenkolbens (80) in der ersten Bohrung öffnet.

2. Kraftstoffventil (50) nach Anspruch 1, ferner umfassend einen Dichtungsflüssigkeits-Druckverstärker mit einer Betätigungskammer, die mit der Betätigungsflüssigkeitsöffnung verbunden ist.

3. Kraftstoffventil (50) nach Anspruch 2, ferner umfassend eine Verstärkungskammer, die mit der Dichtungsflüssigkeits-Einlassöffnung (70) über ein Rückschlagventil und mit dem Zwischenraum zwischen der ersten Bohrung (81) und dem Pumpenkolben (80) verbunden ist.

4. Kraftstoffventil (50) nach Anspruch 2 oder 3, wobei der Dichtungsflüssigkeits-Druckverstärker ausgelegt ist, den Druck der Dichtungsflüssigkeit während eines Pumpenhubs des Pumpenkolbens (80) zu verstärken.

5. Kraftstoffventil (50) nach Anspruch 4, wobei der Dichtungsflüssigkeits-Druckverstärker ausgelegt ist, den Druck der Dichtungsflüssigkeit auf einen Druck über dem maximalen Druck des Kraftstoffs in der Pumpenkammer (82) zu verstärken.

6. Kraftstoffventil (50) nach einem der vorhergehenden Ansprüche, wobei der Zwischenraum zwischen der ersten Bohrung (81) und dem Pumpenkolben (80) ein schmaler Zwischenraum ist, der eine Schmierung erfordert, die durch die Dichtungsflüssigkeit bereitgestellt wird.

7. Kraftstoffventil (50) nach einem der vorhergehenden Ansprüche, wobei der Pumpenkolben (80) einen oberen Teil mit einem geringfügig vergrößerten Durchmesser (D2) verglichen mit dem Durchmesser (D1) des unteren Teils des Pumpenkolbens (80) aufweist, wobei der obere Teil der Bohrung (81), in welcher der Pumpenkolben (80) aufgenommen ist, einen entsprechend vergrößerten Durchmesser (D2) aufweist, während der untere Teil der Bohrung (81) einen Durchmesser D1 aufweist, wodurch eine Ringkammer (99) gebildet wird.

8. Kraftstoffventil (50) nach Anspruch 7, wobei der obere Teil des Pumpenkolbens (80) einen Dichtungsflüssigkeits-Verstärkungskolben bildet, der das Volumen der Ringkammer (99) reduziert, wenn der Pumpenkolben (80) einen Pumpenhub vornimmt, wobei die Ringkammer (99) mit einer Quelle von Dichtungsflüssigkeit über ein Rückschlagventil (91) verbunden ist.

9. System zur Zufuhr von Kraftstoff mit niedrigem Flammpunkt, welches ein Kraftstoffventil (50) nach Anspruch 1 oder 2 umfasst, ferner umfassend eine Quelle von Dichtungsflüssigkeit mit einem gesteuerten Druck Ps1 und eine Quelle von flüssigem Kraftstoff mit einem gesteuerten Druck Pf, wobei Ps1 höher ist als Pf.

10. System zur Zufuhr von Kraftstoff mit niedrigem Flammpunkt nach Anspruch 7, wobei Ps1 niedriger ist als der maximale Druck in der Pumpenkammer (82) während eines Pumpenhubs, und wobei Ps1, die Größe des Zwischenraums und der maximale Druck in der Pumpenkammer (82) während eines Pumpenhubs in Abhängigkeit voneinander derart ausgewählt sind, dass Kraftstoff in den Zwischenraum eintritt und die Dichtungsflüssigkeit entlang eines Abschnitts, jedoch nicht der gesamten Länge des Pumpenkolbens (80) ersetzt, und wobei die Dichtungsflüssigkeit im Wesentlichen den gesamten Kraftstoff in dem Zwischenraum ersetzt, bevor ein weiterer Pumpenhub stattfindet.

## Revendications

1. Soupape d'injection (50) destinée à injecter un carburant liquide à faible point d'inflammabilité dans la chambre de combustion d'un gros moteur à combustion interne à auto-allumage à deux temps à turbocompresseur à régime lent, ladite soupape d'injection (50) comprenant :
un boîtier de soupape d'injection allongé (52) avec une extrémité arrière et une extrémité avant,
une buse (54) avec une pluralité de trous de buse (56), ladite buse (54) étant disposée à l'extrémité avant dudit boîtier de soupape allongé (52),
un orifice d'entrée de carburant (53) dans ledit boîtier de soupape d'injection allongé (52), pour le raccordement à une source (60) de carburant liquide sous pression,
un orifice de liquide d'actionnement (78) dans ledit boîtier de soupape d'injection allongé (52), pour le raccordement à une source de fluide d'actionnement (97),
une aiguille de soupape (61) déplaçable axialement, reçue de façon coulissante dans un alésage longitudinal (64) dans ledit boîtier de soupape allongé (52), ladite aiguille de soupape (61) présentant une position fermée et une position ouverte,
ladite aiguille de soupape (61) reposant sur un siège de soupape (69) dans ladite position fermée, et ladite aiguille de soupape (61) étant relevée par rapport audit siège de soupape (69) dans ladite position ouverte, et ladite aiguille de soupape (61) étant sollicitée vers ladite position fermée,
une chambre de carburant (58) dans ledit boîtier de soupape allongé (52), ladite chambre de carburant (58) entourant ladite aiguille de soupape (61) et débouchant sur ledit siège de soupape (69), un piston de pompe (80) reçu dans un premier alésage (81) dans ledit boîtier de soupape avec une chambre de pompe (82) dans ledit premier alésage (81) sur un côté dudit piston de pompe (80),
un piston d'actionnement (83) reçu dans un deuxième alésage (84) dans ledit boîtier de soupape (52) avec une chambre d'actionnement (85) dans ledit deuxième alésage (84) sur un côté dudit piston d'actionnement (83),
ledit piston de pompe (80) étant relié audit piston d'actionnement (83) pour se déplacer conjointement avec celui-ci,
ladite chambre d'actionnement (85) étant reliée audit orifice de liquide d'actionnement (78),
ladite chambre de pompe (82) présentant une sortie reliée à ladite chambre de carburant (58) et une entrée reliée audit orifice d'entrée de carburant (53),
un orifice d'entrée de liquide d'étanchéité (70) pour le raccordement à une source de liquide d'étanchéité sous pression (57),
un conduit (30) reliant ledit orifice d'entrée de liquide d'étanchéité (70) audit premier alésage (81), ledit conduit (30) débouchant sur l'espace entre ledit premier alésage (81) et ledit piston de pompe (80) pour étanchéifier ledit piston de pompe (80) dans ledit premier alésage.

2. Soupape d'injection (50) selon la revendication 1, comprenant en outre un multiplicateur de pression de liquide d'étanchéité, avec une chambre d'actionnement reliée audit orifice de liquide d'actionnement.

3. Soupape d'injection (50) selon la revendication 2, comprenant en outre une chambre de multiplicateur reliée audit orifice d'entrée de liquide d'étanchéité (70) par le biais d'un clapet antiretour et audit espace entre ledit premier alésage (81) et ledit piston de pompe (80).

4. Soupape d'injection (50) selon la revendication 2 ou 3, dans laquelle ledit multiplicateur de pression de liquide d'étanchéité est configuré pour multiplier la pression dudit liquide d'étanchéité pendant une course de pompe dudit piston de pompe (80).

5. Soupape d'injection (50) selon la revendication 4, dans laquelle ledit multiplicateur de pression de liquide d'étanchéité est configuré pour multiplier la pression dudit liquide d'étanchéité jusqu'à une pression supérieure à la pression maximale du carburant dans ladite chambre de pompe (82).

6. Soupape d'injection (50) selon l'une quelconque des revendications précédentes, dans laquelle ledit espace entre ledit premier alésage (81) et ledit piston de pompe (80) est un espace étroit nécessitant une lubrification fournie par ledit liquide d'étanchéité.

7. Soupape d'injection (50) selon l'une quelconque des revendications précédentes, dans laquelle le piston de pompe (80) présente une partie supérieure avec un diamètre légèrement agrandi (D2) en comparaison avec le diamètre (D1) de la partie inférieure du piston de pompe (80), la partie supérieure de l'alésage (81) dans laquelle est reçu le piston de pompe (80) présentant un diamètre agrandi de façon correspondante (D2), tandis que la partie inférieure de l'alésage (81) présente un diamètre D1 formant ainsi une chambre annulaire (99).

8. Soupape d'injection (50) selon l'invention la revendication 7, dans laquelle la partie supérieure du piston de pompe (80) forme un piston de multiplicateur de liquide d'étanchéité, lequel réduit le volume de la chambre annulaire (99) lorsque le piston de pompe (80) effectue une course de pompe, la chambre annulaire (99) étant reliée à une source de liquide d'étanchéité par le biais d'un clapet anti-retour (91).

9. Système d'alimentation en carburant à faible point d'inflammabilité, comprenant une soupape d'injection (50) selon la revendication 1 ou 2, comprenant en outre une source de liquide d'étanchéité avec une pression contrôlée Psl et une source de carburant liquide avec une pression contrôlée Pf, où Psl est supérieure à Pf.

10. Système d'alimentation en carburant à faible point d'inflammabilité selon la revendication 7, dans lequel Psl est inférieure à la pression maximale dans la chambre de pompe (82) pendant une course de pompe, et dans lequel Psl, la taille dudit espace et la pression maximale dans ladite chambre de pompe (82) pendant une course de pompe sont sélectionnées de manière interdépendante, de telle façon que du carburant entre dans ledit espace et remplace ledit liquide d'étanchéité le long d'une partie mais pas de la totalité de la longueur dudit piston de pompe (80), et dans lequel ledit liquide d'étanchéité remplace substantiellement la totalité du carburant dans ledit espace avant une autre course de pompe.
